# FASCICULE DE BREVET EUROPEEN

(11) **EP 3 146 626 B1**
(45) Date de publication et mention de la délivrance du brevet: **26.07.2023**
(21) Numéro de dépôt: 15725814.6
(22) Date de dépôt: 28.04.2015
(51) Int. Cl.: H02P 9/10

(54) **MACHINE ELECTRIQUE TOURNANTE POUR VEHICULE AUTOMOBILE**
DREHEN ELEKTRISCHER MASCHINE FÜR EINEN KRAFTFAHRZEUG
ROTATING ELECTRIC MACHINE FOR A MOTOR VEHICLE

(30) Priorité: 22.05.2014 FR 1454617
(43) Date de publication de la demande: 29.03.2017
(73) Titulaire: Valeo Equipements Electriques Moteur, 94046 Créteil Cedex (FR)
(72) Inventeur: GRANZIERA, Cyril, 94700 Maisons-Alfort (FR); MALBRANQUE, Ronald, 94100 St. Maur des Fossés (FR)
(74) Mandataire: Valeo Powertrain Systems
(86) Numéro de dépôt international: PCT/FR2015/051146
(87) Numéro de publication internationale: WO 2015/177428

(56) Documents cités:
- US-A1- 2006 238 172
- US-A1- 2012 262 130
- KIDD A L: "Successful selection and operation of overcurrent and residual current protective measures", INSTALLATION ENGINEERING ESIGNING AND MAINTAINING SUCCESSFUL SYSTE MS, 1988., THIRD INTERNATIONAL CONFERENCE ON LONDON, UK, LONDON, UK,IEE, UK, 1 janvier 1988 (1988-01-01), pages 50-57, XP006518734, ISBN: 978-0-85296-362-3

## Description

### DOMAINE TECHNIQUE DE L'INVENTION

La présente invention concerne une machine électrique tournante pour véhicule automobile.

Elle trouve une application particulière mais non limitative dans le domaine des alterno-démarreurs de véhicule automobile.

### ARRIÈRE-PLAN TECHNOLOGIQUE DE L'INVENTION

Dans un véhicule automobile comportant un moteur thermique et une machine électrique tournante telle qu'un alternateur ou un alterno-démarreur, un telle machine comporte de manière non limitative :
- un rotor comprenant un inducteur dans lequel est injecté un courant d'excitation ; et
- un stator comprenant un bobinage polyphasé.

En mode alternateur appelé également mode générateur, la machine permet de transformer un mouvement de rotation du rotor entraîné par le moteur thermique du véhicule, en un courant électrique induit dans les phases du stator. Un pont redresseur relié aux phases du stator permet de redresser le courant induit sinusoïdal en un courant continu qui alimente des consommateurs dans le véhicule ainsi qu'une batterie.

En raison notamment d'une électrification croissante des véhicules automobiles et le développement des véhicules de type « hybride », les besoins en courant débité en mode alternateur sur le réseau de bord du véhicule sont de plus en plus importants. La machine électrique tournante est dimensionnée pour fournir en continu un courant nominal qui correspond sensiblement au courant maximum que peut fournir la machine. Cependant ce courant maximum est bien au dessus de la consommation moyenne en courant du véhicule automobile. En effet, le véhicule automobile n'a pas besoin d'un courant important en permanence et le courant moyen délivré par la machine est bien en dessous du courant maximum que celle-ci peut fournir.

Un inconvénient de cet état de la technique, tel que décrit dans les documents US 2012/262130 A1 ou US 2006/238172 A1, réside dans le fait que la machine électrique tournante est surdimensionnée par rapport aux besoins moyens du véhicule automobile.

Dans ce contexte, la présente invention vise à résoudre l'inconvénient précédemment mentionné.

### DESCRIPTION GENERALE DE L'INVENTION

A cette fin l'invention propose une machine électrique tournante pour véhicule automobile. Elle est définie par le jeu de revendications en annexe de la présente description.

Ainsi, en pilotant la machine électrique tournante en mode générateur étendu ou en mode générateur nominal en faisant varier le courant d'excitation du rotor tout en protégeant thermiquement ladite machine électrique tournante, on peut utiliser des machines électriques tournantes plus petites qui pourront fournir un courant maximum aussi important qu'une machine électrique tournante de classe supérieure.

Selon des modes de réalisation non limitatifs, l'ensemble électronique, peut comporter en outre une ou plusieurs caractéristiques supplémentaires parmi les suivantes :
a) L'adaptation du courant d'excitation est effectuée en fonction d'une cartographie de courant d'excitation maximum à ne pas dépasser en fonction de la vitesse du rotor, une cartographie étant associée à un mode de fonctionnement donné.
b) Le module de protection thermique est adapté pour évaluer les trois températures suivantes : une première température du stator, une deuxième température de modules de puissance reliés au stator, et une troisième température du dispositif de commande.
c) La première température du stator est une valeur de température mesurée sur le stator via un capteur de température; ou une valeur de température estimée du stator.
d) La valeur de température estimée du stator est basée sur : la température ambiante, un accroissement de température entre la température ambiante et la température du stator, la capacité thermique de la machine électrique tournante, la conductance thermique de la machine électrique tournante, et les pertes équivalentes du stator.
e) Le dispositif de commande est adapté pour envoyer à une unité de contrôle moteur du véhicule automobile une information relative au mode de fonctionnement de la machine électrique tournante.
f) La machine électrique tournante est un alterno-démarreur.
g) La machine électrique tournante est un alternateur.
h) Un mode générateur étendu peut être utilisé pour un mode de freinage récupératif.

### BREVE DESCRIPTION DES FIGURES

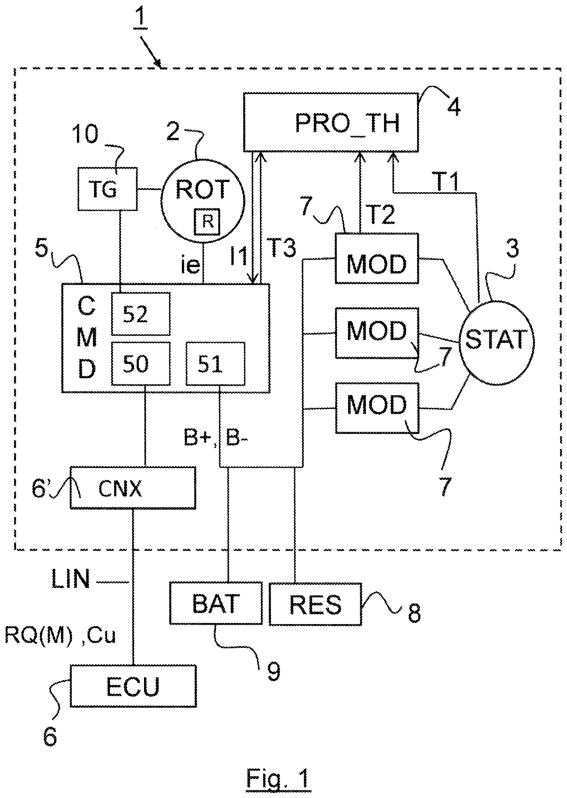

L'invention et ses différentes applications seront mieux comprises à la lecture de la description qui suit et à l'examen des figures qui l'accompagnent.
- la figure 1 représente un bloc-diagramme d'une machine électrique tournante pour véhicule automobile selon un mode de réalisation non limitatif de l'invention ;
- la figure 2 montre des courbes représentant un courant débité par la machine électrique tournante de la figure 1 pour différents modes de fonctionnement ;
- la figure 3 illustre différentes fonctions effectuées par la machine électrique tournante de la figure 1 ;
- la figure 4 représente un organigramme d'une évaluation thermique effectuée par un module de protection thermique de la machine électrique tournante de la figure 1 ;
- la figure 5 montre des courbes représentant un courant d'excitation maximum fonction de la vitesse du rotor de la machine

électrique tournante de la figure 1 pour différents modes de fonctionnement.

### DESCRIPTION DE MODES DE REALISATION DE L'INVENTION

Les éléments identiques, par structure ou par fonction, apparaissant sur différentes figures conservent, sauf précision contraire, les mêmes références.

La machine électrique tournante 1 pour véhicule automobile est décrite en référence aux figures 1 à 5.

Tel qu'illustré à la figure 1, selon un mode de réalisation non limitatif, la machine électrique tournante 1 comporte :
- un rotor ROT référencé 2 alimenté par un courant d'excitation ie ;
- un stator STAT référencé 3 comprenant un bobinage polyphasé et couplé audit rotor 2 ;
- un module de protection thermique PRO_TH référencé 4 ;
- un dispositif de commande CMD référencé 5.

Dans un premier mode de réalisation non limitatif, la machine électrique tournante 1 est un alternateur classique. Dans ce cas, le dispositif de commande 5 peut être intégré dans le régulateur de tension de la machine. Dans un deuxième mode de réalisation non limitatif, la machine électrique tournante 1 est une machine réversible fonctionnant en mode moteur ou en mode générateur, telle qu'un alterno-démarreur. Dans ce cas, le dispositif de commande 5 peut être intégré dans les circuits de commande de la machine réversible et activé lorsque celle-ci fonctionne en mode générateur.

Les différents éléments de la machine électrique tournante 1 sont décrits plus en détail ci-après.

Le rotor 2 est un inducteur dans lequel est injecté un courant d'excitation ie.

Sur le rotor 2 est fixée une cible magnétique TG référencée 10. La cible magnétique 10 couplée à des capteurs à effets hall 52 permet de donner la position du rotor 2 qui est nécessaire pour faire fonctionner la machine en mode moteur.

Le stator 3 est relié via ses phases à des modules de puissance 7, ici trois modules de puissance, qui forment le pont redresseur/onduleur.

Le module de protection thermique 4 est adapté pour mesurer ou estimer au moins une température T dans la machine électrique tournante 1 et la comparer avec un seuil de protection thermique th associé.

Dans un mode de réalisation non limitatif, trois températures T sont mesurées ou évaluées, qui sont les suivantes :
- une première température T1 du stator 3 ;
- une deuxième température T2 des modules de puissance 7 ;
- une troisième température T3 du dispositif de commande 5, et notamment de ses composants électroniques.

La première température T1 du stator 3 est :
k) une valeur de température mesurée V1 sur le stator 3 via un capteur de température Ct (disposé directement sur les chignons du stator) ; ou
l) une valeur de température estimée V2 du stator 3.

Pour estimer la valeur de température V2 du stator 3, dans un mode de réalisation non limitatif, on se base sur :
m) la température ambiante θamb de la machine électrique tournante 1 (délivrée par un abaque) ;
n) un accroissement de température Δt entre la température ambiante θamb et la température du stator 3 ;
o) la capacité thermique Cth de la machine électrique tournante 1 ;
p) la conductance thermique Gth de la machine électrique tournante 1 ; et
q) les pertes équivalentes Ps du stator 3.

Dans un exemple non limitatif, la troisième température T3 est mesurée au moyen d'un capteur de température de type CTN.

Comme illustré sur la figure 1, le dispositif de commande 5 est :
- connecté au rotor 2 ;
- connecté à une unité de contrôle moteur ECU référencé 6 via un connecteur de signal CNX. Il utilise dans un exemple non limitatif, un bus de communication LIN (« Local Interconnect Network ») pour communiquer avec ladite unité de contrôle moteur 6.
- relié au réseau de bord RES référencé 8 du véhicule automobile ; et
- relié à la batterie BAT référencée 9 du véhicule automobile.

Le dispositif de commande 5 produit le courant d'excitation ie du rotor 2 en fonction d'une commande de mode de fonctionnement RQ (appelée également requête de pilotage) et de ladite comparaison de température, de sorte à faire fonctionner la machine électrique tournante 1 selon un mode de fonctionnement M parmi :
r) un mode générateur nominal M1 ; ou
s) au moins un mode générateur étendu M2, M2' de puissance supérieure.

Selon un mode de réalisation non limitatif, le dispositif de commande 5 est adapté pour faire fonctionner la machine 1 dans le mode générateur étendu M2 de puissance supérieure à celle fournie dans le mode générateur nominal M1.

Par puissance supérieure, on entend que la machine électrique tournante 1 fournit un courant supérieur à celui qu'elle fournirait dans le mode générateur nominal M1. Autrement dit, la machine électrique tournante 1 va être dimensionnée pour le courant moyen fourni dans le mode générateur nominal M1, mais pourra fournir dans le mode générateur étendu M2 un courant plus important que celui fournit dans le mode générateur nominal M1 tant que la thermique le permet. Ainsi, on va pouvoir proposer une machine électrique tournante dimensionnée pour la consommation moyenne en courant du véhicule et non plus pour la consommation maximum, tout en autorisant la machine électrique tournante à fonctionner au-delà de son dimensionnement grâce à la protection thermique intégrée.

Dans un mode de réalisation non limitatif, il existe deux modes générateur étendu :
- un premier mode générateur étendu M2 qui permet à la machine électrique tournante 1 de débiter un courant If supérieur au courant débité pendant le mode générateur nominal M1. Dans un exemple non limitatif, ce mode M2 interviendra typiquement pendant des durées dt de quelques minutes à une quinzaine de minutes ;
- un deuxième mode générateur étendu M2' qui correspond par exemple à un mode de freinage récupératif et qui permet à la machine électrique tournante 1 de débiter un courant If supérieur au courant débité pendant le premier mode générateur étendu M2. Dans un exemple non limitatif, ce mode M2' interviendra typiquement pendant des durées dt de quelques secondes à quelques dizaines de secondes.

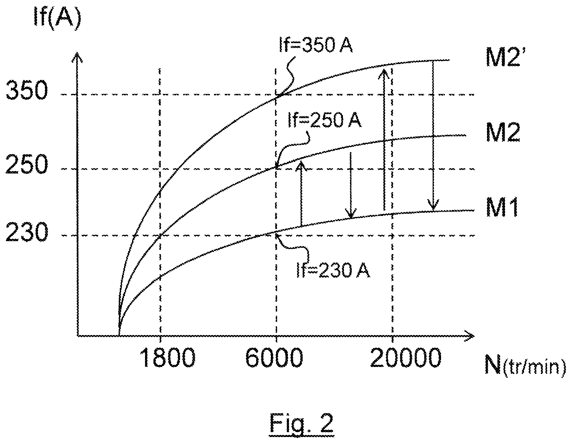

La figure 2 illustre dans un exemple non limitatif le courant débité If de la machine électrique tournante pour les différents modes générateur présentés. En abscisse est indiqué la vitesse de rotation du rotor 2 en tours par minute (N), et en ordonnée le courant débité If.

Tel qu'illustré sur la figure, dans des exemples non limitatifs :
- le mode générateur nominal M1 permet à la machine électrique tournante de débiter un courant If de 230A à 6000 rpm ;
- le premier mode générateur étendu M2 permet à la machine électrique tournante 1 de débiter un courant If de 250A à 6000 rpm ;
- le deuxième mode générateur étendu M2' permet à la machine électrique tournante 1 de débiter un courant If de 350A à 6000 rpm.

Ainsi, la machine électrique tournante 1 est dimensionnée pour débiter en permanence 230A à 6000rpm dans l'exemple non limitatif pris. Dans cet exemple pris, la machine électrique tournante 1 est dite de classe 23. Ainsi, on a une machine électrique tournante de classe 23 qui peut fournir pendant une certaine courte dt dépendante de la thermique un courant If de 250A, voire 350A correspondant donc à une machine de classe supérieure 25, voire 35.

Le dimensionnement d'une telle machine électrique tournante 1 est effectué de la manière suivante.

Dans un alternateur classique, lorsque le courant d'excitation fourni au rotor bobiné a sensiblement un rapport cyclique de 100%, le courant d'excitation étant un signal modulé en largeur d'impulsion (signal PWM), l'alternateur peut fournir sa puissance maximale proche de la puissance nominale de la machine. La résistance électrique du bobinage rotor est dimensionnée de telle manière que lorsque le courant d'excitation est à son maximum (rapport cyclique à 100%), un flux magnétique d'excitation maximum est produit dans la machine 1. Dans une machine 1 selon l'invention, équivalente dans son mode générateur nominal à l'alternateur classique ci-dessus, la résistance électrique R du bobinage d'excitation rotor doit être sensiblement inférieure à celle de cet alternateur classique, de manière à pouvoir injecter d'avantage de courant d'excitation et obtenir ainsi la puissance correspondant au mode générateur étendu. Ainsi par exemple, dans le mode générateur nominal, le courant d'excitation maximal sera à 60 % de rapport cyclique et à 80 et 100% dans les modes générateur étendu M2 et M2'.

L'unité de contrôle moteur 6 envoie la commande de mode de fonctionnement RQ au dispositif de commande 5. C'est cette unité 6 qui connaît les besoins en courant des consommateurs du véhicule automobile. Dans des exemples non limitatifs, les consommateurs du véhicule sont :
- un dégivrage électrique ;
- un système de chauffage pour les rétroviseurs ;
- un système de chauffage pour les sièges ;
- un compresseur électrique pour la climatisation ;
- une radio ;
- les feux d'éclairage et de signalisation etc.

Ainsi, comme on va le voir ci-après, sur demande de l'unité de contrôle moteur 6 et en fonction des trois températures évaluées T1, T2, T3, le dispositif de commande 5 va modifier le courant d'excitation ie de sorte que la machine électrique tournante 1 fournisse, en mode générateur étendu, plus de courant au réseau de bord 8 du véhicule automobile lorsque les appels de courant par les consommateurs sur le réseau de bord sont importants.

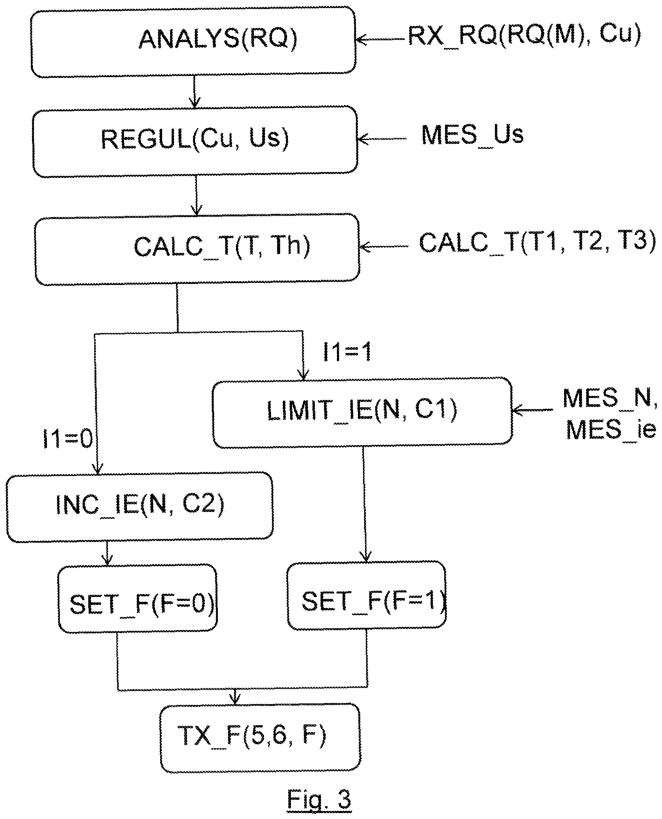

La figure 3 présente un bloc-diagramme fonctionnel des fonctions réalisées par les différents éléments de la machine électrique tournante 1 pour lui permettre de fonctionner selon un mode générateur donné M.

Le dispositif de commande 5 est adapté pour effectuer une lecture du bus de communication LIN. Il acquiert ainsi des informations envoyées par l'unité de contrôle moteur 6 via le bus de communication LIN (fonction RX(RQ(M), Cu)).

Les informations reçues par le dispositif de commande 5 sont :
- une commande de mode de fonctionnement RQ.
   Dans un exemple non limitatif, la commande RQ de premier mode générateur étendu M2 est reçue. L'unité de contrôle moteur 6 demande ainsi à la machine électrique tournante 1 de fournir davantage de courant. Ce sera le cas par exemple juste après le démarrage du moteur thermique du véhicule, lorsqu'il fait froid. En effet, dans ce dernier cas, le réseau de bord du véhicule doit fournir un courant très important pour de nombreux consommateurs du véhicule (systèmes de dégivrage, de chauffage etc.). On notera que le temps d'un dégivrage dure environ 5 minutes et est donc inférieur à la période transitoire de 15 minutes du premier mode générateur étendu M2.
- une consigne de tension Cu pour permettre au dispositif de commande 5 de réguler le réseau de bord 8 à cette valeur de tension. Dans un exemple non limitatif, la consigne de tension est égale à 14.5 V.

Le dispositif de commande 5 analyse la commande de mode de fonctionnement RQ venant de l'unité contrôle moteur 6 (fonction ANALYS(RQ)) et il régule la tension de la machine électrique tournante 1 (fonction REGUL(Cu, Us). Afin de réguler la tension, le dispositif de commande mesure la tension Us aux bornes de la machine électrique tournante 1 (fonction MES_Us) et la compare à la tension de consigne Cu.

Le module de protection thermique 4 évalue la protection thermique de la machine (fonction CALC_T(T, Th)). A cette fin, le module 4 mesure ou estime au moins une température T dans la machine 1 et la compare avec un seuil de protection thermique associé Th. Dans le mode de réalisation non limitatif, le module 4 mesure ou estime la première température T1 du stator 3, la deuxième température T2 des modules de puissance 7, et la troisième température T3 des composants électroniques du dispositif de commande 5 et les compare à des seuils de protection thermiques associés respectifs Th1, Th2 et Th3.

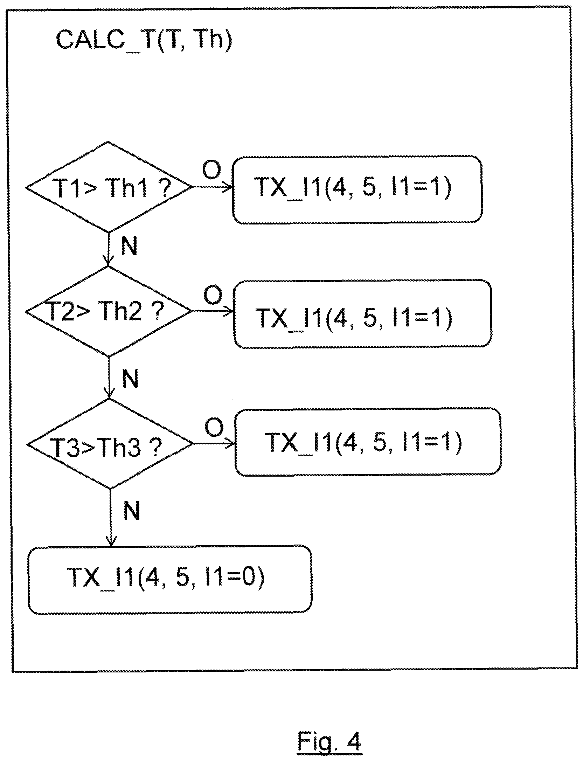

En référence à la figure 4, l'évaluation CALC_T comporte les étapes suivantes :
- le module de protection thermique 4 compare la première température T1 à un premier seuil de protection thermique Th1. Si elle est supérieure au premier seuil Th1, le module de protection thermique 4 envoie une consigne de protection thermique I1 au dispositif de commande 5 pour lui indiquer que la machine ne peut fonctionner en mode générateur étendu M2 comme demandé car elle a atteint sa température maximum autorisée dans le stator (fonction TX_I1(4,5,I1=1) illustrée). Cette information I1 est par exemple un drapeau positionné à 1.
- dans la négative (la première température T1 est en dessous du premier seuil Th1), le module de protection thermique 4 compare la deuxième température T2 au deuxième seuil de protection thermique Th2. Si elle est supérieure à ce deuxième seuil Th2, le module de protection thermique 4 envoie la consigne de protection thermique I1 au dispositif de commande 5 pour lui indiquer que la machine ne peut fonctionner en mode générateur étendu M2 comme demandé car elle a atteint sa température maximum autorisée dans les modules de puissance (fonction TX_I1(4,5,I1=1) illustrée). Le drapeau I1 est positionné à 1.
- dans la négative (la deuxième température T2 est en dessous du deuxième seuil Th2), le module de protection thermique 4 compare la troisième température T3 au troisième seuil de protection thermique Th3. Si elle est supérieure à ce troisième seuil Th3, le module de protection thermique 4 envoie la consigne de protection thermique I1 au dispositif de commande 5 pour lui indiquer que la machine ne peut fonctionner en mode générateur étendu M2 comme demandé car elle a atteint sa température maximum autorisée dans les composants électroniques dudit dispositif de commande 5 (fonction TX_I1(4,5,11=1) illustrée). Le drapeau I1 est positionné à 1.
- dans la négative (la troisième température T3 est en dessous du troisième seuil Th3), le module de protection thermique 4 envoie la consigne de protection thermique I1 au dispositif de commande 5 pour lui indiquer que la machine peut fonctionner en mode générateur étendu M2 comme demandé car elle n'a pas atteint sa température maximum autorisée que ce soit dans le stator 3, dans les modules de puissance 7 ou dans les composants électroniques dudit dispositif de commande 5 (fonction TX_I1(4,5,11=0) illustrée). Le drapeau I1 est positionné à 0.

Ainsi, la machine électrique tournante 1 est protégée thermiquement, et on autorise ou non son fonctionnement en mode générateur étendu en fonction de sa thermique.

Bien entendu, les comparaisons des différentes températures T1 à T3 peuvent s'effectuer dans un ordre différent que celui présenté ci-dessus.

En référence de nouveau à la figure 3, lorsque le dispositif de commande 5 reçoit la consigne de protection thermique I1, en fonction de cette consigne I1 et donc des comparaisons des températures mesurées ou évaluées T1, T2, T3 avec leur seuil respectif Th1, Th2, Th3, il va adapter le courant d'excitation ie qui alimente le rotor 2 de la façon suivante.

Le dispositif de commande 5 :
- a) limite le courant d'excitation ie du rotor 2 pour faire fonctionner la machine électrique tournante 1 dans le mode générateur nominal M1 si la température T devient supérieure à un seuil de protection déterminé Th (fonction LIMIT_IE(N, C1)). Autrement dit, si le dispositif de commande reçoit la consigne I1=1, il limite le courant ie. Dans ce cas, le débit en courant If de la machine 1 est limité au débit du mode générateur nominal M1.
- b) augmente le courant d'excitation ie du rotor 2 pour faire fonctionner la machine électrique tournante 1 dans le mode générateur étendu M2 si la température T est inférieure à un seuil de protection déterminé Th et si le dispositif de commande 5 reçoit une commande de mode de fonctionnement RQ en mode générateur étendu M2 (ce qui est le cas dans l'exemple pris). Autrement dit, si le dispositif de commande reçoit la consigne I1=0, il augmente le courant ie. Dans ce cas, la machine 1 qui est dimensionnée pour fournir classiquement un courant nominal If, peut fournir en cas de besoin sur le réseau de bord un courant supérieur à If tant que la température T de la machine le permet. Cette étape b) est effectuée de la même manière si la commande RQ est une commande de mode de fonctionnement M2'.

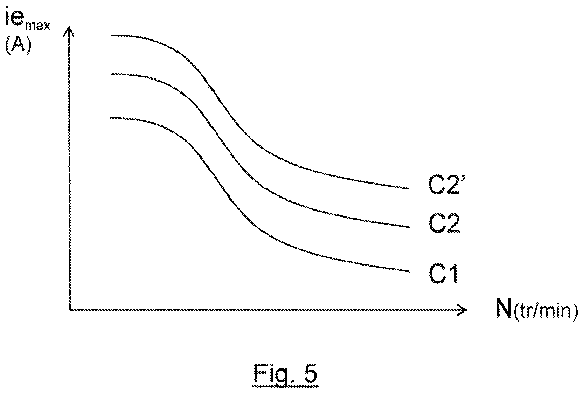

Dans un mode de réalisation non limitatif, l'adaptation du courant d'excitation ie est effectuée en fonction d'une cartographie C1, C2, C2' (ou abaque) de courant d'excitation maximum ieₘₐₓ à ne pas dépasser fonction de la vitesse N du rotor 2, une cartographie C1, C2, C2' étant associée à un mode de fonctionnement respectif M1, M2, M2'. En ordonnée on trouve le courant d'excitation maximum ieₘₐₓ en ampère (A) à ne pas dépasser et en abscisse la vitesse du rotor N en tours par minute (tr/min). Cette cartographie C1, C2 est un gabarit maximum à ne pas dépasser pour la sécurité de la machine électrique tournante 1. Elle est adaptée à la situation de commande provenant de l'unité de contrôle moteur 6. On peut voir sur la figure 5 que le courant d'excitation maximum ieₘₐₓ à ne pas dépasser sur les deuxièmes cartographies C2, C2' est supérieur au courant d'excitation maximum ieₘₐₓ à ne pas dépasser sur la première cartographie C1, et celui sur la deuxième cartographie C2' est supérieur à celui sur la deuxième cartographie C2. Ainsi, le dispositif de commande 5 augmente ou limite le courant ie tout en veillant à ce que ledit courant ie soit toujours inférieur au courant d'excitation maximum autorisé ieₘₐₓ.

On notera que le dispositif de commande 5 est adapté pour mesurer la vitesse N du rotor 2 et également pour mesurer le courant d'excitation ie qui alimente le rotor 2. En effet, la vitesse N du rotor est prise en compte pour le pilotage du courant d'excitation. Dans un mode de réalisation non limitatif, la mesure du courant d'excitation ie s'effectue via un shunt dans le dispositif de commande 5.

Ainsi, dans le cas a) de la limitation du courant d'excitation ie (cas où au moins une des trois températures T1, T2, T3 a atteint son seuil de protection thermique Th), l'adaptation, ici la limitation, du courant d'excitation ie est effectuée en fonction de la première cartographie C1 associée au mode générateur nominal M1 puisque le mode générateur étendu M2 n'est plus disponible.

Dans le cas b) de l'augmentation du courant d'excitation ie (cas où aucune des trois températures T1, T2, T3 n'a atteint son seuil de protection thermique Th), l'adaptation, ici l'augmentation, du courant d'excitation ie est effectuée en fonction de la deuxième cartographie C2 associée au premier mode générateur étendu M2 puisque ce mode est disponible dans l'exemple pris (ou en fonction de la deuxième cartographie C2' associée au mode deuxième générateur étendu M2').

Dans un mode de réalisation non limitatif, le dispositif de commande 5 est en outre adapté pour envoyer à l'unité de contrôle moteur 6 du véhicule automobile une information F relative au mode de fonctionnement de ladite machine électrique tournante 1 (fonction TX_F(5,6, F) illustrée sur la figure 3). Dans un exemple non limitatif, cette information F est un drapeau.

Dans le cas a) de la limitation du courant d'excitation ie et donc du retour en mode générateur nominal M1, ou du non passage en mode générateur étendu M2, le drapeau F est positionné à 1 (fonction SET_F(F=1)). Bien évidemment l'évaluation thermique de la machine 1 se fait continuellement. Aussi, si les températures T1, T2, T3 baissent par la suite de sorte à revenir en dessous de leur seuil respectif, Th1, Th2, Th3, la machine pourra passer en mode générateur étendu M2 ou M2'.

Dans le cas b) de l'augmentation du courant d'excitation ie et donc du passage en premier mode générateur étendu M2 dans l'exemple pris (ou M2'), le drapeau F est positionné à 0 (fonction SET_F(F=0)).

L'unité de contrôle moteur 6 est ainsi prévenue si sa requête de pilotage RQ avec le mode générateur étendu M2 (dans l'exemple pris) a fonctionné ou non.

Bien entendu la description de l'invention n'est pas limitée à l'application, aux modes de réalisation et aux exemples décrits ci-dessus.

Ainsi, la présente invention s'applique à tout type de machines électriques tournantes polyphasées réversibles, tels que des alterno-démarreurs, entraînées par exemple par courroie ou intégrée, et notamment pour des applications hybrides.

Bien entendu la description de l'invention n'est pas limitée aux modes de réalisation et aux exemples décrits ci-dessus.

Ainsi, le module de protection thermique 4 peut être intégré dans le dispositif de commande 5.
t) elle permet de proposer une machine électrique tournante de classe inférieure et donc plus petite et moins puissante pour remplir de façon transitoire les mêmes besoins du véhicule en terme de courant qu'une classe supérieure, moyennant un suivi de température ;
u) elle permet de fournir un mode récupération d'énergie de façon transitoire pour une machine conçue habituellement pour tenir le mode générateur de façon permanente ;
v) elle est simple à mettre en oeuvre et peu coûteuse.

## Revendications

1. Machine électrique tournante (1) pour véhicule automobile, selon laquelle ladite machine électrique tournante (1) comporte :
a) un rotor (2) alimenté par un courant d'excitation (ie) ;
b) un stator (3) comprenant un bobinage polyphasé et couplé audit rotor (2) ;
c) un module de protection thermique (4) adapté pour évaluer au moins une température (T) dans la machine électrique tournante (1) et pour comparer ladite au moins une température (T) avec un seuil de protection thermique associé (Th) ;
d) un dispositif de commande (5) du rotor (2) fournissant le courant d'excitation (ie) en fonction d'une commande de mode de fonctionnement (RQ) reçue d'une unité de contrôle moteur (6) dudit véhicule automobile et de ladite comparaison de température, de sorte à faire fonctionner la machine électrique tournante (1) selon un mode de fonctionnement (M) parmi :
e) un mode générateur nominal (M1) dans lequel la machine est configurée pour délivrer une première puissance maximum; ou
f) au moins un mode générateur étendu (M2, M2') dans lequel la machine est configurée pour délivrer une seconde puissance maximum supérieure à ladite première puissance maximum,
**caractérisé en ce que**
le dispositif de commande (5) étant adapté pour limiter le courant d'excitation (ie) du rotor (2) pour faire fonctionner la machine électrique tournante (1) dans le mode générateur nominal (M1) si la température de celle-ci (T) est supérieure au seuil de protection thermique associé (Th), et
le dispositif de commande (5) étant adapté pour augmenter le courant d'excitation (ie) du rotor (2) pour faire fonctionner la machine électrique tournante (1) dans le mode générateur étendu (M2, M2') si la température de celle-ci (T) est inférieure au seuil de protection déterminé (Th) et si le dispositif de commande (5) reçoit une commande de mode de fonctionnement (RQ) en mode générateur étendu (M2, M2').

2. Machine électrique tournante (1) selon la revendication 1, selon laquelle l'adaptation du courant d'excitation (ie) est effectuée en fonction d'une cartographie (C1, C2) de courant d'excitation maximum (ieₘₐₓ) à ne pas dépasser en fonction de la vitesse (N) du rotor (2), une cartographie (C) étant associée à un mode de fonctionnement donné (M).

3. Machine électrique tournante (1) selon l'une des revendications précédentes, le module de protection thermique (4) est adapté pour évaluer les trois températures suivantes (T) :
g) une première température (T1) du stator (3) ;
h) une deuxième température (T2) de modules de puissance (7) reliés au stator (3) ; et
i) une troisième température (T3) du dispositif de commande (5).

4. Machine électrique tournante (1) selon la revendication précédente 3, selon laquelle la première température (T1) du stator (3) est :
j) une valeur de température mesurée (V1) sur le stator (3) via un capteur de température (Ct) ; ou
k) une valeur de température estimée (V2) du stator (3).

5. Machine électrique tournante (1) selon la revendication précédente 4, selon laquelle la valeur de température estimée (V2) du stator (3) est basée sur :
l) la température ambiante (θa) ;
m) un accroissement de température (Δt) entre la température ambiante (θamb) et la température du stator ;
n) la capacité thermique (Cth) de la machine électrique tournante (1) ;
o) la conductance thermique (Gth) de la machine électrique tournante (1) ; et
p) les pertes équivalentes (Ps) du stator (3).

6. Machine électrique tournante (1) selon l'une quelconque des revendications précédentes, selon laquelle le dispositif de commande (5) est adapté pour envoyer à une unité de contrôle moteur (6) du véhicule automobile une information (F) relative au mode de fonctionnement (M) de ladite machine électrique tournante (1).

7. Machine électrique tournante (1) selon l'une quelconque des revendications précédentes, selon laquelle ladite machine électrique tournante est un alterno-démarreur.

8. Machine électrique tournante (1) selon l'une quelconque des revendications précédentes 1 à 6, selon laquelle ladite machine électrique tournante est un alternateur.

9. Machine électrique tournante (1) selon l'une quelconque des revendications précédentes, selon laquelle un mode générateur étendu (M2') est un mode de freinage récupératif.

## Patentansprüche

1. Rotierende elektrische Maschine (1) für ein Kraftfahrzeug, wobei die rotierende elektrische Maschine (1) Folgendes umfasst:
a) einen Rotor (2), dem ein Erregungsstrom (ie) zugeführt wird;
b) einen Stator (3), der eine Mehrphasenwicklung beinhaltet und mit dem Rotor (2) gekoppelt ist;
c) ein Wärmeschutzmodul (4), das dazu angepasst ist, mindestens eine Temperatur (T) in der rotierenden elektrischen Maschine (1) zu ermitteln und die mindestens eine Temperatur (T) mit einem assoziierten Wärmeschutzschwellenwert (Th) zu vergleichen;
d) eine Steuervorrichtung (5) des Rotors (2), die den Erregungsstrom (ie) in Abhängigkeit von einem Betriebsmodusbefehl (RQ), der von einer Motorkontrolleinheit (6) des Kraftfahrzeugs empfangen wird, und dem Temperaturvergleich bereitstellt, um die rotierende elektrische Maschine (1) gemäß einem von folgenden Betriebsmodi (M) zu betreiben:
e) einem Nenn-Generatormodus (M1), in dem die Maschine dazu konfiguriert ist, eine erste maximale Leistung zu liefern; oder
f) mindestens einem erweiterten Generatormodus (M2, M2'), in dem die Maschine dazu konfiguriert ist, eine zweite maximale Leistung zu liefern, die größer als die erste maximale Leistung ist,
**dadurch gekennzeichnet, dass**
die Steuervorrichtung (5) dazu angepasst ist, den Erregungsstrom (ie) des Rotors (2) zu begrenzen, um die rotierende elektrische Maschine (1) in dem Nenn-Generatormodus (M1) zu betreiben, wenn deren Temperatur (T) höher als der assoziierte Wärmeschutzschwellenwert (Th) ist, und
die Steuervorrichtung (5) dazu angepasst ist, den Erregungsstrom (ie) des Rotors (2) zu erhöhen, um die rotierende elektrische Maschine (1) in dem erweiterten Generatormodus (M2, M2') zu betreiben, wenn deren Temperatur (T) kleiner als der bestimmte Schutzschwellenwert (Th) ist und wenn die Steuervorrichtung (5) einen Betriebsmodusbefehl (RQ) für den erweiterten Generatormodus (M2, M2') empfängt.

2. Rotierende elektrische Maschine (1) nach Anspruch 1, wobei das Anpassen des Erregungsstroms (ie) in Abhängigkeit von einer Kennlinie (C1, C2) eines maximalen Erregungsstroms (ieₘₐₓ), der in Abhängigkeit von der Drehzahl (N) des Rotors (2) nicht überschritten werden darf, erfolgt, wobei eine Kennlinie (C) mit einem gegebenen Betriebsmodus (M) assoziiert ist.

3. Rotierende elektrische Maschine (1) nach einem der vorhergehenden Ansprüche, wobei das Wärmeschutzmodul (4) dazu angepasst ist, die folgenden drei Temperaturen (T) zu ermitteln:
g) eine erste Temperatur (T1) des Stators (3);
h) eine zweite Temperatur (T2) von mit dem Stator (3) verbundenen Leistungsmodulen (7); und
i) eine dritte Temperatur (T3) der Steuervorrichtung (5).

4. Rotierende elektrische Maschine (1) nach dem vorhergehenden Anspruch 3, wobei die erste Temperatur (T1) des Stators (3) Folgendes ist:
j) ein mittels eines Temperatursensors (Ct) an dem Stator (3) gemessener Temperaturwert (V1); oder
k) ein geschätzter Temperaturwert (V2) des Stators (3).

5. Rotierende elektrische Maschine (1) nach dem vorhergehenden Anspruch 4, wobei der geschätzte Temperaturwert (V2) des Stators (3) auf Folgendem basiert:
l) der Umgebungstemperatur (θa);
m) einem Temperaturanstieg (Δt) zwischen der Umgebungstemperatur (θamb) und der Temperatur des Stators;
n) der Wärmekapazität (Cth) der rotierenden elektrischen Maschine (1);
o) der Wärmeleitfähigkeit (Gth) der rotierenden elektrischen Maschine (1); und
p) den äquivalenten Verlusten (Ps) des Stators (3).

6. Rotierende elektrische Maschine (1) nach einem beliebigen der vorhergehenden Ansprüche, wobei die Steuervorrichtung (5) dazu angepasst ist, einer Motorkontrolleinheit (6) des Kraftfahrzeugs eine Information (F) bezüglich des Betriebsmodus (M) der rotierenden elektrischen Maschine (1) zu senden.

7. Rotierende elektrische Maschine (1) nach einem beliebigen der vorhergehenden Ansprüche, wobei die rotierende elektrische Maschine ein Starter-Generator ist.

8. Rotierende elektrische Maschine (1) nach einem beliebigen der vorhergehenden Ansprüche 1 bis 6, wobei die rotierende elektrische Maschine ein Generator ist.

9. Rotierende elektrische Maschine (1) nach einem beliebigen der vorhergehenden Ansprüche, wobei ein erweiterter Generatormodus (M2') ein rekuperativer Bremsmodus ist.

## Claims

1. Rotary electrical machine (1) for a motor vehicle, wherein said rotary electrical machine (1) comprises:
a) a rotor (2) which is supplied by an excitation current (ie);
b) a stator (3) which comprises a polyphase winding, and is coupled to said rotor (2);
c) a thermal protection module (4) which is designed to evaluate at least one temperature (T) in the rotary electrical machine (1), and to compare the said at least one temperature (T) with an associated thermal protection threshold (Th);
d) a device (5) for control of the rotor (2) which supplies the excitation current (ie) according to an operating mode command (RQ) received from a motor control unit (6) of said motor vehicle, and according to said temperature comparison, such as to make the rotary electrical machine (1) operate according to an operating mode (M) from amongst:
e) a nominal generator mode (M1), in which the machine is configured to provide a first maximum power; or
f) at least one extended generator mode (M2, M2'), in which the machine is configured to provide a second maximum power greater than said first maximum power,
**characterized in that** the control device (5) being designed to limit the excitation current (ie) of the rotor (2), in order to make the rotary electrical machine (1) operate in the nominal generator mode (M1) if its temperature (T) is higher than the associated thermal protection threshold (Th) and
the control device (5) being designed to increase the excitation current (ie) of the rotor (2), in order to make the rotary electrical machine (1) operate in the extended generator mode (M2, M2') if its temperature (T) is lower than the protection threshold (Th) determined, and if the control device (5) receives an operating mode command (RQ) in extended generator mode (M2, M2').

2. Rotary electrical machine (1) according to claim 1, wherein the adaptation of the excitation current (ie) is carried out according to a maximum excitation current (iemax) cartography (C1, C2) not to be exceeded according to the speed (N) of the rotor (2), a cartography (C) being associated with a given operating mode (M).

3. Rotary electrical machine (1) according to any preceding claim, wherein the thermal protection module (4) is designed to evaluate the following three temperatures (T):
g) a first temperature (T1) of the stator (3);
h) a second temperature (T2) of power modules (7) connected to the stator (3); and
i) a third temperature (T3) of the control device (5).

4. Rotary electrical machine (1) according to claim 3, wherein the first temperature (T1) of the stator (3) is:
j) a temperature value (V1) measured on the stator (3) via a temperature sensor (Ct); or
k) an estimated temperature value (V2) of the stator (3).

5. Rotary electrical machine (1) according to claim 4, wherein the estimated temperature value (V2) of the stator (3) is based on:
1) the ambient temperature θa);
m) an increase in temperature (Δt) between the ambient temperature (θamb) and the temperature of the stator;
n) the thermal capacity (Cth) of the rotary electrical machine (1);
o) the thermal conductance (Gth) of the rotary electrical machine (1); and
p) the equivalent losses (Ps) of the stator (3).

6. Rotary electrical machine (1) according to any preceding claim, wherein the control device (5) is designed to transmit to a motor control unit (6) of the motor vehicle information (F) relating to the operating mode (M) of the said rotary electrical machine (1).

7. Rotary electrical machine (1) according to any preceding claim 1, wherein the said rotary electrical machine is an alternator-starter.

8. Rotary electrical machine (1) according to any preceding claim, wherein the said rotary electrical machine is an alternator.

9. Rotary electrical machine (1) according to any preceding claim 1, wherein an extended generator mode (M2') is a recuperative braking mode.
